# EUROPEAN PATENT SPECIFICATION

(11) **EP 2 072 339 B1**
(45) Date of publication and mention of the grant of the patent: **26.10.2011**
(21) Application number: 07025073.3
(22) Date of filing: 22.12.2007
(51) Int. Cl.: B60R 13/00

(54) **Object fixing arrangement**
Objektbefestigungsanordnung
Agencement de fixation d'objets

(43) Date of publication of application: 24.06.2009
(73) Proprietor: GM Global Technology Operations LLC, Detroit, MI 48265-3000 (US)
(72) Inventor: Rolandson, Ola, 46890 Vargön (SE)
(74) Representative: Strauss, Peter

(56) References cited:
- WO-A-2007/115722
- DE-U1-202006 009 245
- US-A1- 2006 237 995

## Description

### Field of the invention

The present invention relates to an object fixing arrangement adapted to fixate a separate object to an engine cover.

### Background Art

Sometimes vehicle manufacturers want to attach specific information, for example about the engine, or other objects on engine covers. For example, most manufactures attach badges, for instance with the trademark of the manufacturer. A badge conveys a feeling, associated with a special brand, to the customer. Lately, there have been an increasing interest in under hood appearance of vehicles and consequently, importance of aforementioned badges has increased.

The badges may have a wide range of shapes as well as designs including different materials. They have a range of shapes, for instance circular or quadratic, and different dimensions regarding thickness and area. Also, the badge may be in full colour or single-coloured. A cheaper brand or model may have a plastic badge, which may be inconceivable for a more exclusive brand or model. Instead, a metallic badge may be used for such brands or models. Exclusive models may have badges for example in chrome. Thus, the design of a badge may be varied indefinitely.

The badge may be integrated in the engine cover or attach using an adhesive or a mechanical fastener on the engine cover. However, different types of badges have different requirements on the engine covers. Thus, each engine cover has to be adapted to each type of badge, resulting in a range of engine covers that is as large as the range of badges. It is obvious that this involves heavy expenditure. Thus, there is a need to reduce the cost and the product range.

Document WO 2007/115722 A1 for instance discloses a shaped part suitable for engaging with another part and comprising a primary snap-fit element suitable for being engaged in a locking engagement with a primary mating feature on the other part. The primary snap-fit element comprises a secondary snap-fit element and the shaped part comprises a secondary mating feature that can be brought into locking engagement with a secondary lock feature by or during the execution of a release operation, in which the snap-fit element can be released from the locking engagement with the mating feature.

### Summary of invention

In view of the above, an objective of the invention is to solve or at least reduce the problems discussed above.

These and other objects are achieved by an object fixing arrangement according to claim 1. Preferred embodiments of the invention are defined in the dependent claims.

According to the present invention there is provided an object fixing arrangement adapted to fixate a separate object to an engine cover. The object fixing arrangement comprises mutually matching fixing means, wherein said fixing means on said engine cover is of at least two different types and being further adapted to receive at least two different types of fixing means on different objects. This arrangement allow fixing of objects with different types of fixing means on the engine cover, resulting in the possibility to use one type of cover to various objects regarding design, shape, and material etc. Thus, the manufacturer needs only one tool setting for producing engine covers for different objects. For example, a carmaker may be interested to attach about ten different types of objects with various designs, on comparable engine covers. Consequently, the object fixing arrangement may result in remarkably reduced investment costs.

Said object may be a badge support means, however it may also be a plate. A badge support means may be a badge with integrated fixing means or an article or adapter, which holds a badge on the engine cover.

Preferably, said fixing means on said engine cover may be of at least two different types, each mutually matching to at least one type of fixing means on different objects. This in order to further increase the types of fixing means on objects, which may be attached to the engine cover. Thus, one
type of engine cover may be used for several types of objects with different types of fixing means.

Suitably, each type of said fixing means on said engine cover may be mutually matching one type of fixing means on different objects. This in order to increase the exclusivity of the object. By using fixing means on the cover that mutually matches only one extraordinary type of fixing means on the object, it is difficult for example to rebadge low-priced vehicles to look like exclusive ones.

At least one of said types of fixing means on said engine cover may be a recess adapted to receive at least one mutually matching fixing means on said object.

Alternatively, one of said types of fixing means on said engine cover may be a through recess adapted to receive at least one mutually matching fixing means on said object. A recess and/or a through recess may be a simple fixing means which may be designed to receive different mechanical fasteners. If one recess/through recess is used to several different fixing means, the production of different engine cover types may be reduced.

At least one of said types of fixing means on said engine cover may be a snap fit fixing means. This in order to simplify the production of the objects, which does not have to comprise a complicated fixing means. However, both the object and the engine cover may have snap fit fixing means that hook into each other.

Preferably, said fixing means are arranged asymmetrically. This results in that faulty installation of objects is prevented. Hence, quality assurance is simplified and production costs reduced.

Advantageously, according to the invention said fixing means fixes said plate detachably. This allows the consumer or the manufacturer to change the plate, if desired.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated. Other objectives, features and advantages of the present invention will appear from the following detailed disclosure, from the attached dependent claims as well as from the drawings.

### Brief description of drawings

The above, as well as additional objects, features and advantages of the present invention, will be better understood through the following illustrative and non-limiting detailed description of preferred embodiments of the present invention, with reference to the appended drawings, where the same reference numerals will be used for similar elements.
Figure 1 is a perspective view of an engine cover and a badge with an object fixing arrangement comprising mutually matching fixing means. One part of the object fixing arrangement i.e. the one on the engine cover is magnified.
Figure 2 is a side view of an engine cover and a plate attached together according to present invention.

All the figures are schematic, not necessarily to scale, and show only parts which are necessary in order to elucidate the invention, other parts being omitted or merely suggested.

### Description of preferred embodiments

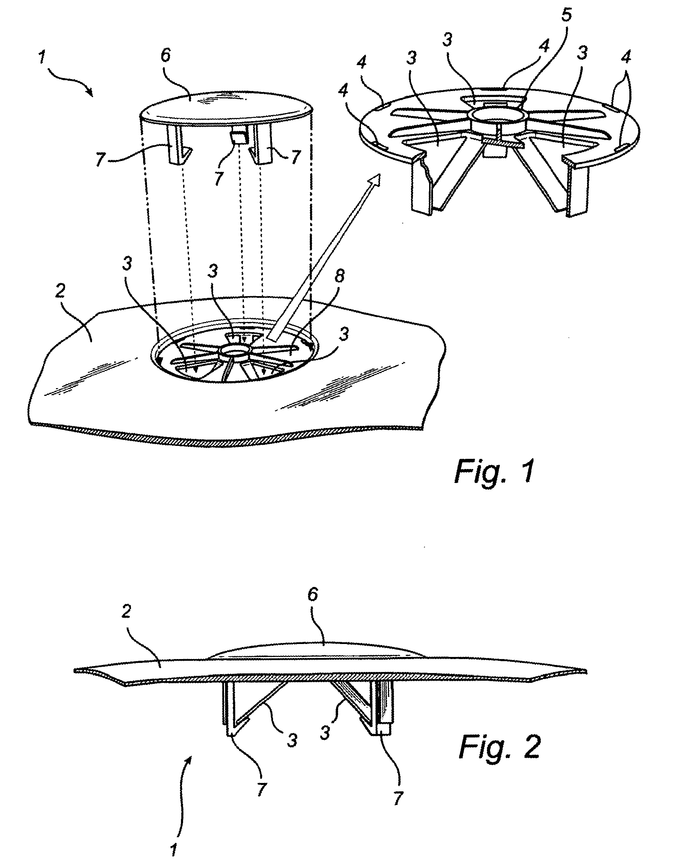

The present invention will be described in more detail below with reference to the accompanying schematic drawings, which for the purpose of illustration show a currently preferred embodiment. Figure 1 shows an engine cover 2 and an object 6 with an object fixing arrangement 1. The object fixing arrangement 1 comprises a first type of fixing means 3 and a second type of fixing means 4 on the engine cover 2 (only a part of the engine cover is shown), and fixing means 7 on the object 6, which are mutually matching to the first type of fixing means 3 on the engine cover 2. The object 6 is here a badge 6. However, it is not limited to be a badge. It may be any kind of article/object, for example, to fixate something to the outside of the engine cover. The badge 6, made of plastic, shows three simple snap fit fixing means 7. However, the snap fit fixing means 7 may be more complex than the one shown. The engine cover has an embedded area 8 where the two different types of fixing means 3, 4 are arranged. However, an embedded area is not necessary and the number of different fixing means is not limited to only two. It may be only one or more. The embedded area 8 is shown in more detail in the magnification, where three fixing means of the first type of fixing means 3 and five fixing means of the second type of fixing means 4 are shown. However, the number of fixing means of each type are not limited to this. It may be only one or several.

The first type of fixing means 3 on the engine cover 2 are means to hold the snap fit fixing means 7 on the plastic badge 6 above. The second type of fixing means 4, arranged in a circle, may receive fixing means from a badge, made of for example metal, which may have other fixing means than for example a plastic badge (not shown). A metal badge may for instance have folding pins or the like. The fixing means on the metal badge are inserted through the openings/through recesses of the mutually matching second type of fixing means 4. After that, the fixing means on the badge (not shown) are folded towards the metal badge 6 in order to hold the metal badge in place. The size of the folding pins and their mutually matching through recesses may differ. For example, one of them may be thinner than the rest in order to prevent the badge to be fixed incorrectly.

To prevent a metal badge to be dented a stay part 5 is arranged in the centre of the portion with fixing means on the cover. The stay part may comprise a ring and a few protrusions. However, it is not limited to this. It may have any desired form. The stay part 5 may also be integrated in the badge instead of the engine cover 2.

The plastic badge 6 in figure 1 is carried towards the engine cover 2 and its fixing means 3. The fixing means 7 on the badge 6 are inserted through the through recesses of the first mutually matching type of fixing means 3. The fixing means 7 on the badge 6 engage in the first type of fixing means 3 on the engine cover 2.

As is shown in figure 1 the first type of fixing means 3, 7 on the cover 2 as well as on the badge 6 are asymmetrically arranged (as a Y) to prevent the badge 6 to be fixed incorrectly. Hence, there is only one way to fix the plate.

Figure 2 shows the engine cover 2 and the badge 6 attached to each other via the object fixing arrangement 1, wherein the badge 6, made out of plastic, is fixed to the engine cover 2 by mutually matching fixing means 3, 7, in this case snap fit fixing means. The fixing means 7 on the badge 6 hook under the fixing means 3 on the engine cover 2.

Within the scope of the invention, the different types of fixing means may be other than mentioned above. For instance, annular snap fit fixing means extending in the circumference of the badge 6 with mutually matching fixing means on the engine cover 2. The badge may have a screw arranged to it, which is inserted through a opening of the cover and fastened with a nut etc. An other possibility is to arrange snap fit fixing means on the engine cover 2, which engage in recesses and/or through recesses on the badge 6 or as shown in the figures, both the cover and the badge may have mutually matching snap fit function. All fixing means may fix said plate detachably. Further, the object or badge may also be fixed on an adapter with fixing means with mutually matching fixing means on the engine cover. Also, the badge may be made of some other material than plastic or metal, for instance a combination of metal and plastic or a ceramic material, or any other material known in the art.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. Object fixing arrangement (1) adapted to fixate a separate object (6) to an engine cover (2), wherein the object fixing arrangement (1) comprises mutually matching fixing means (3, 4, 7), and wherein said fixing means (3, 4) on said engine cover (2) is of at least two different types, **characterized in that** the fixing means (3, 4) on the engine cover (2) is adapted to receive at least two different types of fixing means (7) on different objects (6).

2. Object fixing arrangement (1) according to claim 1, wherein said object (6) is a badge support means.

3. Object fixing arrangement (1) according to claim 1, wherein said object (6) is a plate.

4. Object fixing arrangement (1) according to any one of preceding claims, wherein different types of fixing means (3, 4) on said engine cover (2) mutually match to at least one type of fixing means (7) on different objects (6).

5. Object fixing arrangement (1) according to any one of preceding claims, wherein each type of said fixing means (3, 4) on said engine cover (2) is mutually matching one type of fixing means (7) on different objects (6).

6. Object fixing arrangement (1) according to any one of preceding claims, wherein at least one of said types of fixing means (3, 4) on said engine cover (2) is a recess adapted to receive at least one mutually matching fixing means (7) on said object (6).

7. Object fixing arrangement (1) according to any one of preceding claims, wherein at least one of said types of fixing means (3, 4) on said engine cover (2) is a through recess adapted to receive at least one mutually matching fixing means (7) on said object (6).

8. Object fixing arrangement according (1) to any one of preceding claims, wherein at least one of said types of fixing means (3, 4) on said engine cover (2) is a snap fit fixing means.

9. Object fixing arrangement (1) according to any one of preceding claims, wherein said fixing means (3, 4, 7) are arranged asymmetrically.

10. Object fixing arrangement (1) according to any of preceding claims, wherein said fixing means (3, 4, 7) fixes said object (6) detachably.

## Patentansprüche

1. Objektbefestigungsanordnung (1), die dazu ausgeführt ist, ein getrenntes Objekt (6) auf einer Motorhaube (2) zu befestigen, wobei die Objektbefestigungsanordnung (1) zueinander passende Befestigungsmittel (3, 4, 7) umfasst und wobei die Befestigungsmittel (3, 4) auf der Motorhaube (2) von wenigstens zwei unterschiedlichen Arten sind, **dadurch gekennzeichnet, dass** die Befestigungsmittel (3, 4) auf der Motorhaube (2) dazu ausgeführt sind, wenigstens zwei unterschiedliche Arten von Befestigungsmitteln (7) auf unterschiedlichen Objekten (6) aufzunehmen.

2. Objektbefestigungsanordnung (1) gemäß Anspruch 1, wobei das Objekt (6) ein Emblemhaltermittel ist.

3. Objektbefestigungsanordnung (1) gemäß Anspruch 1, wobei das Objekt (6) eine Platte ist.

4. Objektbefestigungsanordnung (1) gemäß einem der vorangehenden Ansprüche, wobei unterschiedliche Arten von Befestigungsmitteln (3, 4) auf der Motorhaube wechselseitig zu wenigstens einer Art von Befestigungsmitteln (7) auf unterschiedlichen Objekten (6) passen.

5. Objektbefestigungsanordnung (1) gemäß einem der vorangehenden Ansprüche, wobei jede Art der Befestigungsmittel (3, 4) auf der Motorhaube (2) wechselseitig zu einer Art von Befestigungsmitteln (7) auf unterschiedlichen Objekten (6) passt.

6. Objektbefestigungsanordnung (1) gemäß einem der vorangehenden Ansprüche, wobei wenigstens eine der Arten von Befestigungsmitteln (3, 4) auf der Motorhaube (2) eine Vertiefung ist, die dazu ausgeführt ist, wenigstens ein wechselseitig passendes Befestigungsmittel (7) auf dem Objekt (6) aufzunehmen.

7. Objektbefestigungsanordnung (1) gemäß einem der vorangehenden Ansprüche, wobei wenigstens eine der Arten von Befestigungsmitteln (3, 4) auf der Motorhaube (2) ein durchgehender Schlitz ist, der dazu ausgeführt ist, wenigstens ein wechselseitig passendes Befestigungsmittel (7) auf dem Objekt (6) aufzunehmen.

8. Objektbefestigungsanordnung (1) gemäß einem der vorangehenden Ansprüche, wobei wenigstens eine der Arten von Befestigungsmitteln (3, 4) auf der Motorhaube (2) ein Einschnapp-Befestigungsmittel ist.

9. Objektbefestigungsanordnung (1) gemäß einem der vorangehenden Ansprüche, wobei die Befestigungsmittel (3, 4, 7) asymmetrisch angeordnet sind.

10. Objektbefestigungsanordnung (1) gemäß einem der vorangehenden Ansprüche, wobei die Befestigungsmittel (3, 4, 7) das Objekt (6) trennbar befestigen.

## Revendications

1. Agencement de fixation d'objet (1) adapté pour fixer un objet séparé (6) à un couvercle de moteur (2), où l'agencement de fixation d'objet (1) comprend des moyens de fixation mutuellement assortis (3, 4, 7), et où lesdits moyens de fixation (3, 4) sur ledit couvercle de moteur (2) est au moins de deux types différents, **caractérisé en ce que** les moyens de fixation (3, 4) sur le couvercle du moteur (2) sont adaptés pour recevoir au moins deux différents types de moyens de fixation (7) sur différents objets (6).

2. Agencement de fixation d'objet (1) selon la revendication 1, où ledit objet (6) est un moyen de support d'un badge.

3. Agencement de fixation d'objet (1) selon la revendication 1, où ledit objet (6) est une plaque.

4. Agencement de fixation d'objet (1) selon n'importe laquelle des revendications précédentes, où différents types de moyens de fixation (3, 4) sur ledit couvercle de moteur (2) sont mutuellement assortis à au moins un type de moyen de fixation (7) sur différents objets (6).

5. Agencement de fixation d'objet (1) selon n'importe laquelle des revendications précédentes, où chaque type desdits moyens de fixation (3, 4) sur ledit couvercle de moteur (2) est mutuellement à un type de moyen de fixation (7) sur différents objets (6).

6. Agencement de fixation d'objet (1) selon n'importe laquelle des revendications précédentes, où au moins un desdits types de moyen de fixation (3, 4) sur ledit couvercle de moteur (2) est un renfoncement adapté pour recevoir au moins un moyen de fixation mutuellement assorti (7) sur ledit objet (6).

7. Agencement de fixation d'objet (1) selon n'importe laquelle des revendications précédentes, où au moins un desdits types de moyen de fixation (3, 4) sur ledit couvercle de moteur (2) est un renfoncement débouchant adapté pour recevoir au moins un moyen de fixation mutuellement assorti (7) sur ledit objet (6).

8. Agencement de fixation d'objet (1) selon n'importe laquelle des revendications précédentes, où au moins un desdits types de moyen de fixation (3, 4) sur ledit couvercle de moteur (2) est un moyen de fixation à emboîtement-pression.

9. Agencement de fixation d'objet (1) selon n'importe laquelle des revendications précédentes, où lesdits moyens de fixation (3, 4, 7) sont agencés de façon asymétrique.

10. Agencement de fixation d'objet (1) selon n'importe laquelle des revendications précédentes, où lesdits moyens de fixation (3, 4, 7) fixent ledit objet (6) de façon détachable.
